Europäisches Patentamt

European Patent Office

Office européen des brevets

(11) Publication number: **0 296 648**
**A1**

(12) **EUROPEAN PATENT APPLICATION**

(21) Application number: **88200951.7**

(22) Date of filing: **11.05.88**

(51) Int. Cl.⁴: **G01F 13/00 , G01F 15/00 , B67D 5/30**

(30) Priority: **02.06.87 FR 8707723**

(43) Date of publication of application:
**28.12.88 Bulletin 88/52**

(84) Designated Contracting States:
**DE GB IT NL**

(71) Applicant: **PUMPTECH N.V.**
**Atlantic House Noorderlaan 147 Bus 5C**
**B-2030 Antwerpen(BE)**

(72) Inventor: **Lively, Kirk**
**Hinnavagen 42**
**N-4030 Hinna(NO)**
Inventor: **Montaron, Bernard**
**1, Allée du Parc**
**F-42270 Saint Priest en Jarez(FR)**
Inventor: **Pauzon, Jean-Jacques**
**4, Rue Honoré de Balzac**
**F-42000 Saint Etienne(FR)**

(74) Représentative: **Richebourg, Michel**
**Dowell Schlumberger Z.I. Molina Chazotte**
**F-42000 Saint-Etienne(FR)**

(54) Liquid metering system with a broad range of volumes, viscosities and applications chiefly for oil-sector fluids.

(57) A device for volumetric metering of liquids. The device comprises a liquid metering system (1) installed on one or more supply lines (3) pressurized by an appropriate method (2). The volumetric metering assembly comprises a volume flowmeter connected in series with a valve controlling the flow of the liquid to be metered. Flow data is used by the monitoring box to control the opening and closing of the valve. The monitoring box comprises a microprocessor which runs a program compensating the metering errors due to the response time of the control valve.

Figure 1

# LIQUID METERING SYSTEM WITH A BROAD RANGE OF VOLUMES, VISCOSITIES AND APPLICATIONS CHIEFLY FOR OIL-SECTOR FLUIDS

This invention concerns repetitive metering of liquids on the basis of a programmable volume setpoint. The method used consists in integrating the flow data supplied by a volume flowmeter, so as to obtain the value of the volume which has flowed through the line after opening of control valve connected in series with the flowmeter. When the volume measured reaches the setpoint value, a control valve closure order is sent.

The majority of systems currently available use an adjustable mechanical volume device. The first system of this type uses the graduated tank method. An operator must be assigned to monitoring the system. This system is far from accurate and involves a high risk of human error. The second system is based on an alternating cylinder-piston assembly.

The liquid to be metered is pressurized. It then passes through the cylinder-piston assembly, with the pressurized liquid from the reserve pushing the piston, which then discharges the liquid on its other side to the user. The movement of the piston is alternated by a set of four control valves. Metering is determined by adjusting the stroke and the number of cycles. This system is efficient, but hard to adjust when the viscosity of the liquid to be metered is too high.

Notably in the oil industry, there is thus a need for an accurate, reliable and easy to use liquid metering system not requiring an operator devoted full time to monitoring it, even for liquids with very high viscosity and for a broad range of setpoint values.

By preferably using a non-intrusive flowmeter, this invention minimizes the effects of viscosity. The use of a microprocessor-based control system allows integration of a self-adapting learning program which can optimize compensation of metering errors due to the non-negligible response times of the mechanical elements such as the control valves. As described below, this self-adapting system itself corrects phenomena such as valve wear, etc., by evaluating the evolution of the Ep volumes from one operation to another.

Figure 1 represents an overall view of the invention.

Figure 2 represents the items used to meter a liquid.

Figure 3 represents an overall view of the equipment used to meter four different liquids.

Figure 4 represents the evolution of the volume of liquid to be metered as a function of time.

Figure 5 represents the estimated volume of liquid which has flowed after the control valve closure order has been sent, according to the flowrate when the valve was fully open.

Figure 6 represents the evolution of the volume of liquid as a function of time, when a flow limiter is used at the end of the metering line.

Figure 7 describes the basic operations carried out by the microprocessor, which is at the heart of the control system.

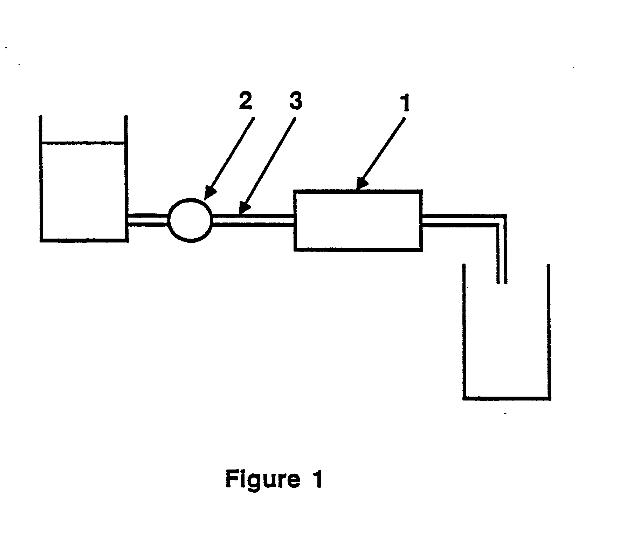

Figure 1 illustrates the invention as a whole. The volumetric metering system 1 is installed on one or more supply lines 3, pressurized by an appropriate device 2. The liquid can be pressurized with a pump or simply by gravity.

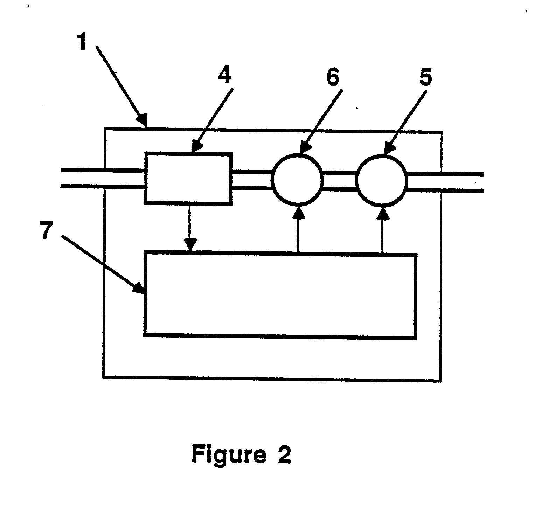

Figure 2 describes the architecture of the liquid volumetric metering device 1. The volume flowmeter 4 is connected in series on the line with the control valve 5 and the flow limiter 6, with at east two positions for creating a head loss on the line. The flow data is supplied to the control system 7, which controls the opening and closing of the "open/closed" valve 5, as well as the activation and deactivation of the flow limiter 6. The flow limiter 6 could for example be made by modifying a valve identical to the "open/closed" control valve 5, so that in the closed position, there is a reduced cross-section available for liquid flow. The control system 7 is built around a microprocessor.

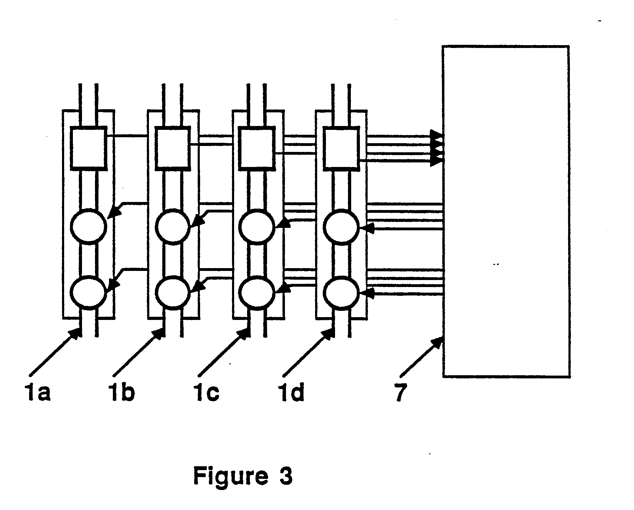

Figure 3 shows the volumetric metering equipment used for simultaneous metering of four different liquids. The microprocessor control system 7 is sized so that it can control four separate metering sections 1a, 1b, 1c and 1d. This number four is not a maximum, but is simply well-suited to the oil industry.

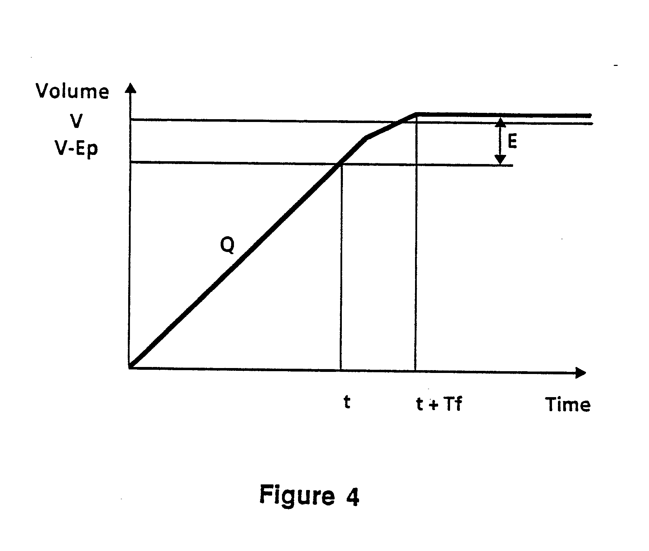

Figure 4 gives the evolution of the volume flowing through the system, given that the flow limiter 6 is not installed. When the control valve 5 is open, the liquid flows with a rate Q. At moment t, the valve closure order is sent. Owing to the control valve closure time Tf, a quantity of liquid E flows after the closure order has been sent. As the flowmeter works constantly, the program can measure the value of the excess volume E and memorize it.

Thus, for each metering operation, the control valve closure order is sent when the volume transferred reaches setpoint value V, minus the excess volume Ep measured during the previous metering operation. This is one of the original features of the invention.

The difference between the real volume which has flowed and the setpoint value is equal to the difference between E and Ep. This difference is all the smaller as the pumping conditions do not vary significantly from one metering operation to the next.

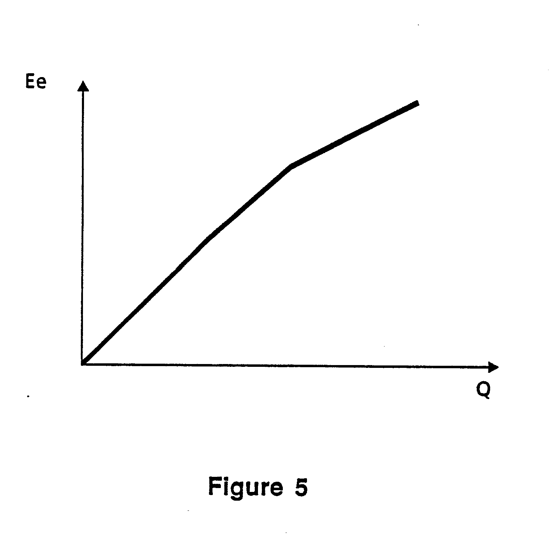

Figure 5 gives value Ee, which is the estimated volume of excess liquid which has flowed after the valve closure order has been sent, on the basis of the flow Q when the control valve is completely open. This value Ee is used instead of Ep for the first metering operation when Ep is not yet available. This curve is initially calculated in the laboratory. However, the microprocessor system 7 can be used to refine these memorized Ee values on the basis of the E and Q values actually measured, using a weighted average algorithm which takes account of the values learned.

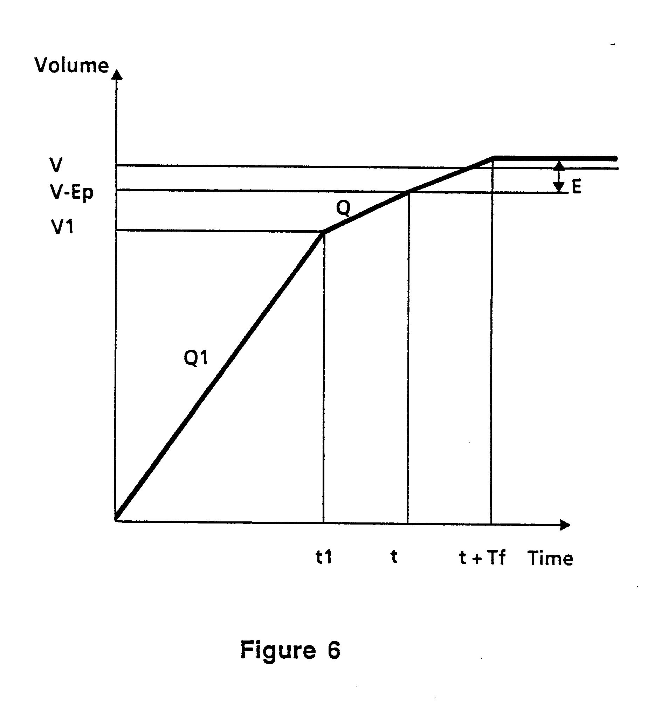

Figure 6 gives the evolution of the volume flowing through the system when the flow limiter 6 is used. This flow limiter is another original feature of the invention. The process consists in pumping the liquid with a high flowrate (to achieve the oil industry drainage times, which must be as short as possible), and then in activating the flow limiter towards the end of the drainage operation, at an instant precisely calculated by the system electronics. The reduced flow at the end of drainage means that the system according to the invention can be made extremely precise, as described below. However, when less precision is required, a system without flow limiter, or with the flow limiter disconnected, is also effective.

The E excess volume flowing after the closure order has been sent to control valve 5, is all the smaller as the flow Q at closure of the valve is low. Consequently, the difference between E and Ep from one metering operation to the next decreases with Q, thus improving metering accuracy. However, the time for which the flow is limited to Q should be as short as possible, while remaining greater than the maximum closure time Tf of the control valve 5.

The volume V1, which determines the moment at which the flow reduction order is sent, is calculated according to the flow measured at full opening Q1 and the setpoint value V.

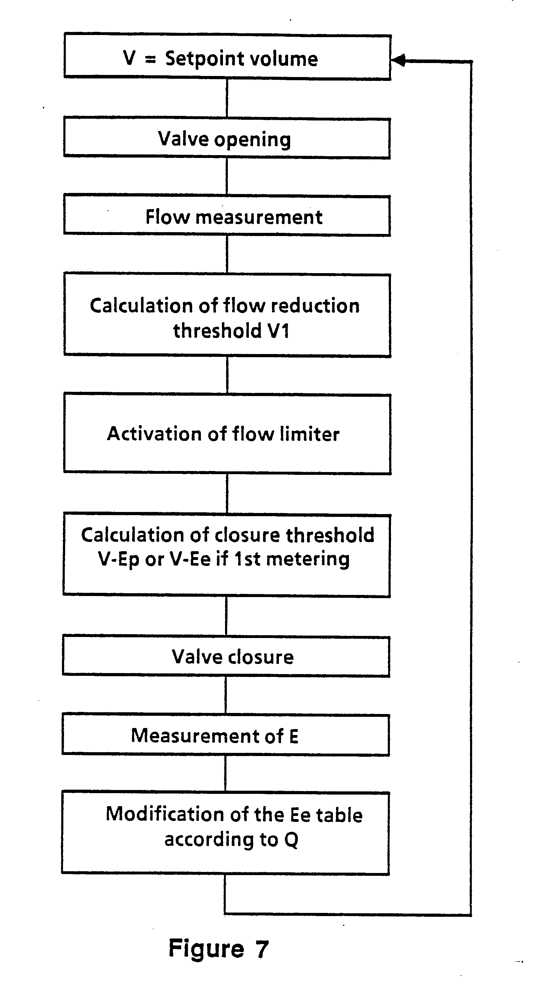

Figure 7 summarizes all the basic operations performed in metering a liquid. These operations combine limiting the excess volume flowing after the control valve closure order has been sent, by limiting the flow at the end of metering, with compensating the excess volume by anticipating the closure order, and modifying the excess volumes table according to the actual flow.

The precision obtained is about 1/20 l.

In oil-related operations, the volumes to be drained are frequently of about 4 to 100 l, this being a precision of 1.25 % to 0.5 %, while respecting the short drainage time requirement (for 100 l, about 1 min.).

Currently, known systems give a true precision of at best 5 to 20 %, plus the drawbacks mentioned earlier. Furthermore, thanks to the self-adapting facility in the system, the extremely high precision of the system according to the invention, unique in the oil industry sector, does not deteriorate with time.

## Claims

1. A volume (1) (or Mass) liquid metering system connected on one or more supply lines 3 pressurized by an appropriate device (2) (pump, gravity, etc.), wherein, for each supply line, it comprises a volumetric (or mass) flowmeter 4 in series with an "open/closed" line closure valve 5, at least one device (6) with two positions for creating a controlled head loss in the line and a control device 7 programmed to actuate valves 5 and 6, taking account of the response times of said items, such as to meter a volume of liquid as close as possible to the setpoint volume, whatever the flow in the line.

2. A metering system as claimed in claim 1, wherein the device 6 is an "open/closed" valve identical to valve 5, modified so as to leave a reduced passage available to the liquid in the closed position.

3. A metering system as claimed in claims 1 to 2, wherein the control device 7 comprises an electronic microprocessor with a memory containing a table of the characteristics of the closure valve, giving the volume of liquid flowing in the line according to the flowrate, from the moment the closure order is sent to valve 5 by control device 7. This table enables the program to anticipate the closure order by an appropriate time, called the closure advance time.

4. A metering system as claimed in claims 1 to 3, used to meter a series of setpoint volumes, wherein the microprocessor control device 7 comprises a self-adapting program calculating the closure advance time for the metering operation in progress, corrected by the value memorized during the previous operation for the real volume of liquid which flowed through the line after the closure order was sent to valve 5.

5. A metering system as claimed in claims 1 to 4, wherein the microprocessor control device 7 comprises a program calculating the moment at which the flow limiter 6 is to be activated, on the basis of the setpoint volume and the flow measured at the fully open position, using an appropriate algorithm calculated to limit the reduced flow time to a value which is small compared to the total metering time, but nonetheless greater than the maximum closure time of valve 5.

6. A metering system as claimed in claims 1 to 5, wherein the microprocessor control device 7 comprises a program for learning the true characteristics of closure valve 5, modifying the values memorized in the closure valve characteristics table according to the true values measured, using a weighted average algorithm taking account of the values learned.

7. A metering system as claimed in claims 1 to 6, wherein the flowmeter 4 is an electromagnetic flowmeter, or vibrating tubes flowmeter.

13

**2   3           1**

## Figure 1

14

**Figure 2**

**Figure 3**

16

**Figure 4**

17

**Figure 5**

18

Figure 6

```
┌─────────────────────────────────┐
│      V = Setpoint volume        │◄─────┐
└─────────────────────────────────┘      │
                  │                       │
┌─────────────────────────────────┐      │
│          Valve opening          │      │
└─────────────────────────────────┘      │
                  │                       │
┌─────────────────────────────────┐      │
│         Flow measurement        │      │
└─────────────────────────────────┘      │
                  │                       │
┌─────────────────────────────────┐      │
│   Calculation of flow reduction │      │
│          threshold V1           │      │
└─────────────────────────────────┘      │
                  │                       │
┌─────────────────────────────────┐      │
│     Activation of flow limiter  │      │
└─────────────────────────────────┘      │
                  │                       │
┌─────────────────────────────────┐      │
│  Calculation of closure threshold│     │
│   V-Ep or V-Ee if 1st metering  │      │
└─────────────────────────────────┘      │
                  │                       │
┌─────────────────────────────────┐      │
│          Valve closure          │      │
└─────────────────────────────────┘      │
                  │                       │
┌─────────────────────────────────┐      │
│         Measurement of E        │      │
└─────────────────────────────────┘      │
                  │                       │
┌─────────────────────────────────┐      │
│   Modification of the Ee table  │      │
│         according to Q          │      │
└─────────────────────────────────┘      │
                  │                       │
                  └───────────────────────┘
```

Figure 7

European Patent
Office

# EUROPEAN SEARCH REPORT

Application Number

EP 88 20 0951

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| Y | WO-A-8 604 572 (KODAK LTD) * Figures; abstract; page 1, lines 13-33; page 3, line 30 - page 4, line 9; page 4, line 26 - page 5, line 6; page 5, lines 11-13 * | 1-5 | G 01 F 13/00 G 01 F 15/00 B 67 D 5/30 |
| A | | 6 | |
| Y | US-A-3 651 989 (WESTRICH) * Figure; abstract * | 1-5 | |
| A | PATENT ABSTRACTS OF JAPAN, vol. 7, no. 176 (P-214)[1321], 4th August 1983; & JP-A-58 82 123 (TOUKIYOU TATSUNO K.K.) 17-05-1983 * Whole document * | 1 | |
| | | | TECHNICAL FIELDS SEARCHED (Int. Cl.4) |
| | | | G 01 F B 67 D |

The present search report has been drawn up for all claims

| Place of search | Date of completion of the search | Examiner |
|---|---|---|
| THE HAGUE | 14-10-1988 | ROSE A.R.P. |

EPO FORM 1503 03.82 (P0401)